# EUROPÄISCHE PATENTSCHRIFT

(11) **EP 2 564 969 B1**
(45) Veröffentlichungstag und Bekanntmachung des Hinweises auf die Patenterteilung: **03.03.2021**
(21) Anmeldenummer: 12182598.8
(22) Anmeldetag: 31.08.2012
(51) Int. Cl.: B23K 20/12

(54) **Rührreibschweißverfahren zur Verbindung von plattenförmigen Werkstücken**
Friction stir welding method for connecting two panel-shaped workpieces
Procédé de soudage par friction-malaxage pour la liaison de pièces usinées en forme de plaques

(30) Priorität: 01.09.2011 DE 102011112042; 01.09.2011 US 201161530077 P
(43) Veröffentlichungstag der Anmeldung: 06.03.2013
(73) Patentinhaber: Airbus Operations GmbH, 21129 Hamburg (DE)
(72) Erfinder: Ostersehlte, Hartmut, 28199 Bremen (DE)

(56) Entgegenhaltungen:
- DE-A1-102009 040 526
- US-A1- 2009 184 201
- US-B1- 6 199 745

## Beschreibung

### Gebiet der Erfindung

Die Erfindung betrifft ein Rührreibschweißverfahren zur randseitigen Verbindung von aus einer Aluminiumlegierung bestehenden aneinanderstoßenden plattenförmigen Werkstücken, wobei ein rotierendes Bobbin Werkzeug unter Ausübung einer beidseitigen Anpresskraft an die plattenförmigen Werkstücke sowie unter Vorschub entlang eines Fügespalts zwischen den beiden plattenförmigen Werkstücken bewegt wird.

Das Einsatzgebiet der Erfindung erstreckt sich auf industrielle Fertigungsprozesse, bei denen plattenförmige Werkstücke, wie beispielsweise Aluminiumbleche randseitig miteinander stoffschlüssig zu verbinden sind. Insbesondere im Flugzeugbau lässt sich die erfindungsgemäße Lösung beim Verbinden von Rumpfschalen einsetzen. Sowohl Quernähte zwischen in der Regel ovalen Rumpfsektionen als auch Längsnähte im Rumpfbereich lassen sich als Alternative zum herkömmlichen Nieten hierdurch erzeugen.

### Hintergrund der Erfindung

Bei dem allgemein aus dem Stand der Technik bekannten Rührreibschweißverfahren wird ein rotierendes Werkzeug mit hoher Kraft so lange in den Fügespalt zwischen den beiden miteinander zu verbindenden Werkstücken gedrückt, bis eine Werkzeugschulter auf der Bauteiloberfläche zur Anlage kommt. Durch die Reibung zwischen Werkzeugschulter und den zu fügenden Werkstücken erwärmt sich der Werkstoff unter der Schulter bis kurz unter dem Schmelzpunkt. Dieser Temperaturanstieg hat einen Festigkeitsabfall zur Folge, wodurch der Werkstoff plastifiziert wird und eine Vermischung der Fügezone möglich wird. Mit dem Einsetzen einer Vorschubbewegung wird das rotierende Werkzeug mit hoher Anpresskraft entlang des Fügespalts bewegt. Der durch die Vorschubbewegung entstehende Druckgradient zwischen Vorder- und Rückseite des Werkzeugs und dessen Rotationsbewegung bewirken den Transport von plastifiziertem Werkstoff um das Werkzeug herum, der sich dort vermischt und eine Schweißnaht bildet. Am Ende des Vorschubweges wird das sich drehende Werkzeug wieder aus der Fügezone herausgezogen. Da das Rührreibschweißen im Gegensatz zu konventionellen Schmelz-Schweißverfahren bei Temperaturen unterhalb des Schmelzpunktes von Leichtmetalllegierungen erfolgt, werden nachteilige Gefügeveränderungen beim Erstarren der Schmelze vermieden. Dadurch können auch die allgemein als schwer schweißbar klassifizierten hörfesten Aluminiumlegierungen der Luft- und Raumfahrt ohne Zusatzwerkstoff und ohne große Festigkeitsverluste verschweißt werden.

Insbesondere beim Rührreibschweißen der Quernaht zwischen benachbarten Rumpfsektionen tritt das Problem auf, dass innenseitig der Rumpfsektionen keine Gegenhalter zur Aufnahme der durch das Werkzeug aufzubringenden Presskraft installierbar sind. Für derartige Anwendungsfälle kommen daher spezielle, so genannte Bobbin-Werkzeuge, zur Anwendung, bei denen die die Anpresskraft erzeugende Werkzeugschulter mit einer im Werkzeug integrierten Gegenschulter korrespondiert.

Aus der US 6,758,382 B1 geht ein solches Bobbin-Werkzeug zur Durchführung des Rührreibschweißverfahrens hervor. Das Bobbin-Werkzeug besteht im Wesentlichen aus einem oberen Schulterteil, das in Drehbewegung versetzbar ist, welches mit einem unteren Schulterteil korrespondiert, welches als Gegenhalter für die durch das obere Schulterteil aufgebrachte Anpresskraft auf die Werkstückoberfläche fungiert. Das untere Schulterteil ist an einem Pin befestigt, der zur Durchführung des Rührreibschweißens sowohl drehbar ist, als auch axial verstellbar ist, um die Anpresskraft des oberen Schulterteils im Zusammenwirken mit dem unteren Schulterteil auf das Werkstück einzustellen. Die Einstellung der Anpresskraft auf andere Prozessparameter erfolgt unter Zuhilfenahme von entsprechenden Sensorelementen zur Messung von Prozess-Ist-Zuständen, die von einer elektronischen Steuereinheit ausgewertet werden. Im Ergebnis der Auswertung werden die Prozessparameter, wie Vorschub, Anpresskraft und Drehzahl des Werkzeugs gesteuert.

Nachteilhaft bei dem Rührreibschweißen unter Verwendung eines Bobbin-Werkzeugs ist, dass auf beiden Werkstückseiten charakteristische Schweißmarken entstehen, die sich als halbkreisförmige Riefen darstellen. Diese sollten möglichst im Sichtbereich der Werkstücke oder aus statischen Gründen geglättet, eingeebnet oder entfernt werden. Würden diese charakteristischen Schweißmarken allerdings durch einen spanenden Fertigungsschritt, wie Fräsen oder Schleifen, entfernt werden, so könnte die erforderliche Materialdicke an der Stelle der Schweißnaht in Folge Materialabtrag unterschritten werden.

Aus der DE 10 2009 040 526 A1 ist bekannt, das Bobbin-Werkzeug während der Bewegung entlang des Fügespalts mit einer zusätzlichen Axialkraft zu beaufschlagen, um den Bereich der erzeugten Schweißnaht derart plastisch zu verformen, dass dieser unter Bildung einer gegenüber der Werkstückoberfläche hervorstehenden Schweißnahterhebung zu einer Seite der plattenförmigen Werkstücke hin gedrückt wird. Die US 6,199,745 B1 offenbart ein hierfür geeignetes Bobbin-Werkzeug.

### Kurzbeschreibung der Erfindung

Es ist daher die Aufgabe der vorliegenden Erfindung, ein Verfahren zur Verbindung von aus einer Aluminiumlegierung bestehenden aneinanderstoßenden plattenförmigen Werkstücken mittels Rührreibschweißverfahren zu schaffen, welches/welche eine Entfernung der charakteristischen Schweißmarken ohne lokale Unterschreitung der Materialdicke ermöglicht.

Die Aufgabe wird durch ein Verfahren gemäß dem. Anspruch 1 gelöst. Die jeweils nachfolgenden abhängigen Ansprüche geben vorteilhafte Weiterbildungen der Erfindung wieder.

Die Erfindung schließt die verfahrenstechnische Lehre ein, dass das Bobbin-Werkzeug während er Bewegung entlang des Fügespalts mit einer zusätzlichen Axialkraft Fx beaufschlagt wird, um den Bereich der erzeugten Schweißnaht derart plastisch zu verformen, dass dieser unter Bildung einer gegenüber der Werkstückoberfläche hervorstehenden Schweißnahterhebung zu einer Seite der plattenförmigen Werkstücke hin gedrückt oder gezogen wird. Vorrichtungstechnisch sind hierfür Mittel zum Beaufschlagen des Bobbin-Werkzeugs mit der zusätzlichen Axialkraft (F_{X}) während der Bewegung entlang des Fügespalts vorgesehen. Derartige Mittel können beispielsweise ein auf den Werkzeughaltekopf einwirkender Hydraulikzylinder oder ein elektrischer Linearantrieb sein.

Mit anderen Worten wird das Bobbin-Werkzeug also derart eingestellt, dass ein Teil des Werkstoffs beim Schweißen auf die eine Seite der plattenförmigen Werkstücke verlagert wird. Die so erzeugte Schweißnahterhebung kann anschließend eingeebnet werden, beispielsweise durch Fräsen oder Schleifen, so dass zumindest zu der einen Seite der so miteinander verbundenen plattenförmigen Werkstücke eine ebene Oberfläche entsteht. Vorzugsweise wird auf das Bobbin-Werkzeug als zusätzliche Axialkraft Fx eine Zugkraft ausgeübt, um die Schweißnahterhebung zu der einen Seite der plattenförmigen Werkstücke hin zu verlagern. Alternativ hierzu ist es jedoch auch denkbar, die Axialkraft Fx als Drückkraft auf das Bobbin-Werkzeug aufzubringen, soweit dies den fertigungstechnischen

Erfordernissen entspricht und sich die erfindungsgemäß gewünschte Schweißnahterhebung hierdurch kontrolliert erzeugen lässt. Die zusätzliche Axialkraft (F_{X}) kann dabei in Abhängigkeit von der gewünschten Lage der Schweißnahterhebung eingestellt werden.

Es ist auf der der Schweißnahterhebung gegenüberliegenden Seite der plattenförmigen Werkstücke eine beidseitig des Fügespalts verlaufende Materialaufdickung vorgesehen. Diese Materialaufdickung bietet einen Materialvorrat, um die ansonsten an dieser Seite der Werkstücke durch das Durchdrücken der Schweißnaht entstehende Einbeulung zu vermeiden. Die miteinander zu verbindenden plattenförmigen Werkstücke weisen eine Materialdicke zwischen 2 bis 8 mm auf. Die Materialaufdickung beträgt das 1,5-bis 2-fache der Materialdicke, um den angestrebten Materialausgleich herbeizuführen.

Gemäß einem weiteren bevorzugten Prozessparameter sollte die auf das Bobbin-Werkzeug während der Bewegung entlang des Fügespalts einwirkende zusätzliche Axialkraft Fx derart bemessen sein, dass die Schweißnahterhebung 0,1-0,5 mm von der Werkstückoberfläche hervorsteht. Diese relativ geringe Schweißnahterhebung ist ausreichend, um im nachfolgenden Verfahrensschritt die charakteristischen Schweißmarken rückstandslos zu entfernen.

Bilden die plattenförmigen Werkstücke Außenhautplatten eines Flugzeugrumpfes, so befindet sich die Materialaufdickung vorzugsweise rumpfinnenseitig und die Schweißnahterhebung rumpfaußenseitig, da sich durch das anschließende Entfernen der Schweißmarken der außenliegende Sichtbereich des Flugzeugrumpfes mit einer glatten Oberfläche gestalten lässt. Neben diesem optischen Vorteil werden durch das Entfernen der Schweißmarken auch Materialkerben entfernt, um die Dauerfestigkeit der Verbindung zu erhöhen. Ferner verbessern sich auch die aerodynamischen Eigenschaften des Flugzeugrumpfs.

### Kurzbeschreibung der Zeichnungen

Weitere die Erfindung verbessernde Maßnahmen werden nachstehend gemeinsam mit der Beschreibung eines bevorzugten Ausführungsbeispiels der Erfindung anhand der Zeichnung näher dargestellt. Es zeigt:
- Figur 1: eine schematische Darstellung eines sich im Eingriff in miteinander zu verbindenden plattenförmigen Werkstücken befindliches Bobbin-Werkzeug,
- Figur 2: eine Querschnittsdarstellung der beiden aneinanderstoßenden und miteinander zu verbindenden plattenförmigen Werkstücke vor dem Reibrührschweißen,
- Figur 3: die beiden plattenförmigen Werkstücke nach Figur 2 nach dem Rührreibschweißen, und
- Figur 4: die beiden plattenförmigen Werkstücke nach Figur 3 nach dem Entfernen der Schweißnahterhebung.

### Detailbeschreibung der Zeichnungen

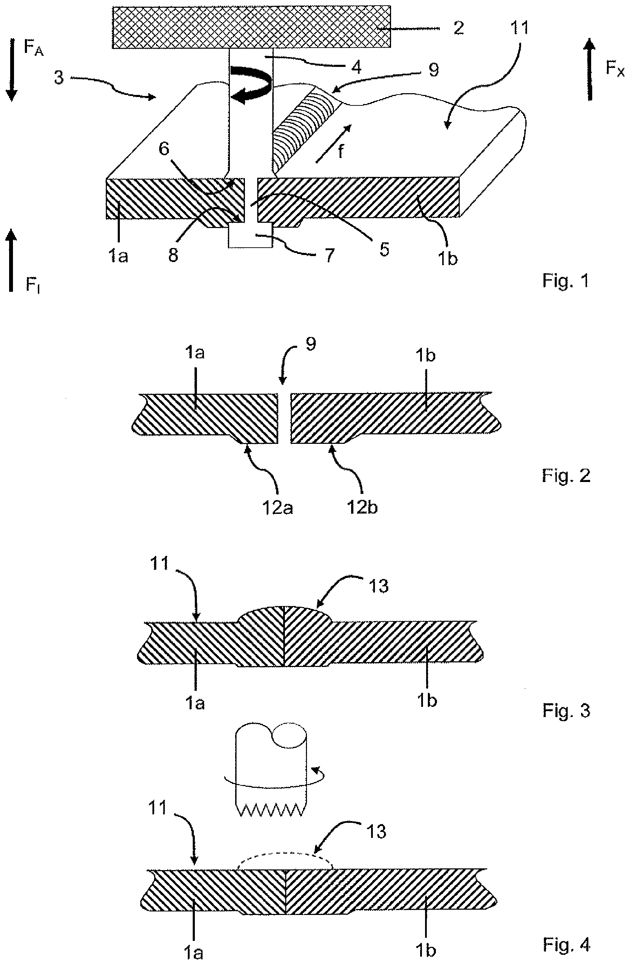

Gemäß Figur 1 umfasst eine Vorrichtung zur Verbindung von zwei aneinanderstoßenden plattenförmigen Werkstücken 1a und 1b aus Aluminium ein von einer elektronisch gesteuerten Maschine 2 angetriebenes Bobbin-Werkzeug 3, welches mehrteilig aufgebaut ist.

Das Bobbin-Werkzeug 3 besteht insoweit im Wesentlichen aus einem Werkzeugschaft 4, an dessen distalem Ende ein Pinabschnitt 5 relativ geringeren Durchmessers angeordnet ist. Zwischen dem Werkzeugschaft 4 und dem Pinabschnitt 5 ist eine obere Werkzeugschulter 6 ausgebildet. Seitens des distalen Endes des Pinabschnitts 5 ist als Gegenhalter ein Endstück 7 relativ größeren Durchmessers angeordnet, welcher eine untere Werkzeugschulter 8 bildet.

Der Werkzeugschaft 4 wird durch die Maschine 2 mit dem Pinabschnitt 5 in Drehbewegung versetzt, wodurch Wärme in die Werkstücke 1a und 1b eingebracht wird, um das Rührreibschweißen entlang eines Fügespalts 9 zwischen den beiden Werkstücken 1a und 1b durchzuführen. Durch gleichzeitig axiales Anpressen der unteren Werkzeugschulter 8 sowie der oberen Werkzeugschulter 6 an die Oberfläche der Werkstücke 1a und 1b wird eine eine zusätzliche Wärmeenergie erzeugende Anpresskraft auf die Werkstückoberfläche ausgeübt. Auf das Bobbin-Werkzeug 3 wirkt während der durch den Vorschub f bewirkten Bewegung entlang des Fügespalts 9 eine zusätzliche Axialkraft F_{X}, welche ebenfalls von der Maschine 2 erzeugt wird, um den Bereich der durch das Rührreibschweißen erzeugten Schweißnaht 10 derart plastisch zu verformen, dass sich dieser unter Bildung einer gegenüber der Werkstückoberfläche 11 hervorstehende Schweißnahterhebung in Richtung der Axialkraft F_{X} verformt.

Nach Figur 2 sind zu einer Seite der plattenförmigen Werkstücke 1a und 1b im Bereich des Fügespalts 9 Materialaufdickungen 12a und 12b vorgesehen, die ca. das 1,5-bis 2-fache der Materialdicke der beiden plattenförmigen Werkstücke 1a und 1b entspricht. Diese Materialaufdickungen 12a und 12b bilden einen Materialvorrat dafür, dass auf der gegenüberliegenden Seite der plattenförmigen Werkstücke 1a und 1b eine Schweißnahterhebung 13 erzeugt wird, wie in Figur 3 ersichtlich.

Die Schweißnahterhebung 13 steht bis zu 0,5 mm von der Werkstückoberfläche 11 der beiden plattenförmigen Werkstücke 1a und 1b hervor. Durch die Krafteinwirkung auf das - nicht weiter dargestellte - Bobbin-Werkzeug 3 in Axialrichtung wird durch die Schweißnahterhebung 13 der Materialbereich um die Schweißnaht herum zur oberen Seite der plattenförmigen Werkstücke 1a und 1b hin verlagert, um diesen anschließend gemäß Figur 4 abzutragen.

Das Abtragen der Schweißnahterhebung 13 erfolgt über ein spanabhebendes Werkzeug 14, das hier als eine Art Fräser ausgebildet ist, und das nach Abfräsen der Schweißnahterhebung 13 eine glatte Werkstückoberfläche 11 zwischen den beiden miteinander stoffschlüssig verbundenen Werkstücken 1a und 1b schafft.

Die Erfindung ist nicht beschränkt auf das vorstehend beschriebene bevorzugte Ausführungsbeispiel. Es sind vielmehr auch Abwandlungen hiervon denkbar, welche vom Schutzbereich der nachfolgenden Ansprüche mit umfasst sind. So ist es beispielsweise auch möglich, dass die Schweißnahterhebung 13 nicht durch eine ziehende Bewegung am Bobbin-Werkzeug 3 erzeugt wird, sondern durch eine drückende Bewegung des Bobbin-Werkzeugs 3 während des Rührreibschweißens.

## Patentansprüche

1. Rührreibschweißverfahren zur Verbindung von aus einer Aluminiumlegierung bestehenden aneinanderstoßenden plattenförmigen Werkstücken (1a, 1b),
wobei ein rotierendes Bobbin-Werkzeug (3) unter Ausübung einer beidseitigen Anpresskraft (F_{I} und F_{A}) sowie unter Vorschub (f) entlang eines Fügespalts (9) zwischen den beiden plattenförmigen Werkstücken (1a, 1b) bewegt wird,
wobei das Bobbin-Werkzeug (3) während der Bewegung entlang des Fügespalts (9) mit einer zusätzlichen Axialkraft (F_{X}) beaufschlagt wird, um den Bereich der erzeugten Schweißnaht (10) derart plastisch zu verformen, dass dieser unter Bildung einer gegenüber der Werkstückoberfläche (11) hervorstehenden Schweißnahterhebung (13) zu einer Seite der plattenförmigen Werkstücke (1a, 1b) hin gedrückt wird,
wobei die auf das Bobbin-Werkzeug (3) während der Bewegung entlang des Fügespalts (9) einwirkende zusätzliche Axialkraft (F_{X}) derart bemessen wird, dass die Schweißnahterhebung (13) 0,1 bis 0,5 Millimeter von der Werkstückoberfläche (11) hervorsteht,
wobei die plattenförmigen Werkstücke (1a, 1b) auf der der Schweißnahterhebung (13) gegenüberliegenden Seite eine beidseitig des Fügespalts (9) verlaufende Materialaufdickung (12a, 12b) aufweisen;
wobei die plattenförmigen Werkstücke (1a, 1b) mit einer Materialdicke zwischen 2 bis 8 Millimetern im Bereich des Fügespalts mit einer Materialaufdickung (12a, 12b) um das 1,5-bis 2-fache der Materialdicke der beiden plattenförmigen Werkstücke dimensioniert werden.

2. Rührreibschweißverfahren nach Anspruch 1,
**dadurch gekennzeichnet, dass** auf das Bobbin-Werkzeug (3) als zusätzliche Axialkraft (F_{X}) eine Zugkraft ausgeübt wird, um die Schweißnahterhebung (13) zu einer Seite der plattenförmigen Werkstücke (1a, 1b) hin zu drücken.

3. Rührreibschweißverfahren nach Anspruch 1 oder 2,
**dadurch gekennzeichnet, dass** die zu einer Seite der plattenförmigen Werkstücke (1a, 1b) hin positionierte Schweißnahterhebung (13) mit einem spanabhebenden Werkzeug (14) zumindest teilweise entfernt wird, um eine ebene Werkstückoberfläche (11) zu erzeugen.

4. Rührreibschweißverfahren nach Anspruch 1 oder 2,
**dadurch gekennzeichnet, dass** die zusätzliche Axialkraft (F_{X}) in Abhängigkeit von der gewünschten Lage der Schweißnahterhebung (13) eingestellt wird.

5. Rührreibschweißverfahren nach einem der Ansprüche 1 bis 4, **dadurch gekennzeichnet, dass** die plattenförmigen Werkstücke (1a, 1b) als Außenhautplatten eines Flugzeugrumpfes ausgebildet sind.

6. Rührreibschweißverfahren nach Anspruch 5, **dadurch gekennzeichnet, dass** die plattenförmigen Werkstücke (1a, 1b) je einer Rumpfsektion eines Flugzeugrumpfes zugeordnet sind, und der Fügespalt (9) dem dazwischenliegenden Querspalt entspricht.

7. Rührreibschweißverfahren nach einem der Ansprüche 5 oder 6, **dadurch gekennzeichnet, dass** die Materialaufdickung (12a, 12b) rumpfinnenseitig und die Schweißnahterhebung (13) rumpfaußenseitig angeordnet ist.

## Claims

1. Friction stir welding process for joining abutting plate-shaped workpieces consisting of an aluminium alloy (la, 1b),
wherein a rotating bobbin tool (3) is moved along a joining gap (9) between the two plate-shaped workpieces (la, 1b) while exerting a pressing force (F₁ and F_{A}) on both sides and while advancing (f),
wherein the bobbin tool (3) is subjected to an additional axial force (Fx) during the movement along the joining gap (9) in order to plastically deform the region of the weld (10) produced in such a way that the latter is pressed towards one side of the plate-shaped workpieces (1a, 1b) forming a weld seam protrusion (13) protruding with respect to the workpiece surface (11),
wherein the additional axial force (Fx) acting on the bobbin tool (3) during movement along the joint gap (9) is dimensioned in such a way that the weld seam elevation (13) protrudes 0.1 to 0.5 millimeters from the workpiece surface (11),
wherein the plate-shaped workpieces (la, 1b) have a material thickening (12a, 12b) extending on both sides of the joint gap (9) on the side opposite the weld seam protrusion (13) ;
wherein the plate-shaped workpieces (la, 1b) having a material thickness between 2 to 8 millimeters are dimensioned in the region of the joining gap with a material thickening (12a, 12b) by 1.5 to 2 times the material thickness of the two plate-shaped workpieces.

2. Friction stir welding process according to claim 1, **characterised in that** a pulling force is exerted on the bobbin tool (3) as an additional axial force (Fx) to push the weld protrusion (13) towards one side of the plate-shaped workpieces (1a, 1b).

3. Friction stir welding process according to claim 1 or 2, **characterised in that** the weld protrusion (13) positioned towards one side of the plate-shaped workpieces (la, 1b) is at least partially removed with a cutting tool (14) to produce a flat workpiece surface (11).

4. Friction stir welding process according to claim 1 or 2, **characterised in that** the additional axial force (Fx) is adjusted depending on the desired position of the weld protrusion (13).

5. Friction stir welding process according to one of claims 1 to 4, **characterised in that** the plate-shaped workpieces (la, 1b) are formed as outer skin panels of an aircraft fuselage.

6. Friction stir welding process according to one of the claims 5 or 6, **characterised in that** the plate-shaped workpieces (la, 1b) are each associated with a fuselage section of an aircraft fuselage, and the joining gap (9) corresponds to the transverse gap between them.

7. Friction stir welding process according to one of the claims 5 or 6, **characterised in that** the material thickening (12a, 12b) is arranged on the inside of the fuselage and the weld protrusion (13) is arranged on the outside of the fuselage.

## Revendications

1. Procédé de soudage par friction-malaxage pour l'assemblage de pièces en forme de plaques contiguës constituées d'un alliage d'aluminium (la, 1b),
dans lequel un outil rotatif à bobine (3) est déplacé le long d'un espace de jonction (9) entre les deux pièces en forme de plaque (la, 1b) tout en exerçant une force de pression (F₁ et F_{A}) des deux côtés et en avançant (f),
dans lequel l'outil rotatif à bobine (3) est soumis à une force axiale supplémentaire (Fx) pendant le mouvement le long de l'espace de jonction (9) afin de déformer plastiquement la région de la soudure (10) produite de telle manière que celle-ci est pressée vers un côté des pièces à usiner en forme de plaque (la, 1b) en formant une saillie de cordon de soudure (13) en saillie par rapport à la surface de la pièce à usiner (11),
dans laquelle la force axiale supplémentaire (Fx) agissant sur l'outil rotatif à bobine (3) pendant le mouvement le long de l'espace de jonction (9) est dimensionnée de telle manière que l'élévation du cordon de soudure (13) dépasse de 0,1 à 0,5 millimètres de la surface de la pièce (11),
dans lequel les pièces en forme de plaque (1a, 1b) présentent un épaississement de matériau (12a, 12b) s'étendant des deux côtés de l'espace de jonction (9) sur le côté opposé à la saillie du cordon de soudure (13);
dans lequel les pièces en forme de plaque (1a, 1b) ayant une épaisseur de matériau comprise entre 2 et 8 millimètres sont mises en tension dans la zone de l'interstice de jonction avec un épaississement de matériau (12a, 12b) de 1,5 à 2 fois l'épaisseur d'accouplement des deux pièces en forme de plaque.

2. Procédé de soudage par friction-malaxage selon la revendication 1, **caractérisé en ce qu'**une force de traction est exercée sur l'outil rotatif à bobine (3) comme force axiale supplémentaire (Fx) pour pousser la saillie du cordon de soudure (13) vers un côté des pièces en forme de plaque (la, 1b).

3. Procédé de soudage par friction-malaxage selon la revendication 1 ou 2, **caractérisé en ce que** la saillie du cordon de soudure (13) positionnée vers un côté des pièces en forme de plaque (la, 1b) est au moins partiellement enlevée avec un outil de coupe (14) pour produire une surface de pièce plane (11).

4. Procédé de soudage par friction-malaxage selon la revendication 1 ou 2, **caractérisé en ce que** la force axiale supplémentaire (Fx) est ajustée en fonction de la position souhaitée de la saillie du cordon de soudure (13).

5. Procédé de soudage par friction-malaxage selon l'une des revendications 1 à 4, **caractérisé en ce que** les pièces en forme de plaque (la, 1b) sont formées comme des panneaux de revêtement extérieur d'un fuselage d'avion.

6. Procédé de soudage par friction-malaxage selon l'une des revendications 5 ou 6, **caractérisé en ce que** les pièces en forme de plaque (la, 1b) sont chacune associées à une section de fuselage d'un fuselage d'avion, et l'espace de jonction (9) correspond à l'espace transversal entre elles.

7. Procédé de soudage par friction-malaxage selon l'une des revendications 5 ou 6, **caractérisé en ce que** l'épaississement du matériau (12a, 12b) est disposé à l'intérieur du fuselage et la saillie du cordon de soudure (13) est disposée à l'extérieur du fuselage.
